# EUROPÄISCHE PATENTSCHRIFT

(11) **EP 3 075 579 B1**
(45) Veröffentlichungstag und Bekanntmachung des Hinweises auf die Patenterteilung: **27.05.2020**
(21) Anmeldenummer: 15182472.9
(22) Anmeldetag: 26.08.2015
(51) Int. Cl.: B60D 5/00, B61D 17/22, B64F 1/305

(54) **BALG, Z. B. EINES ÜBERGANGS ZWISCHEN ZWEI GELENKIG MITEINANDER VERBUNDENER FAHRZEUGE**
BELLOWS, E.G. THE TRANSITION BETWEEN TWO VEHICLES WITH A JOINTED CONNECTION
POUTRE, PAR EXEMPLE D'UN SOUFFLET ENTRE DEUX VEHICULES LIES DE MANIERE ARTICULEE

(30) Priorität: 02.04.2015 DE 202015002559 U; 25.04.2015 DE 202015003056 U; 29.07.2015 EP 15178796; 06.08.2015 EP 15180000
(43) Veröffentlichungstag der Anmeldung: 05.10.2016
(60) Teilanmeldung: 17156085.7
(73) Patentinhaber: Hübner GmbH & Co. KG, 34123 Kassel (DE)
(72) Erfinder: GOEBELS, Andre, 34134 Kassel (DE); JÜNKE, Volker, 34123 Kassel (DE)
(74) Vertreter: Patentanwälte Walther Hinz Bayer PartGmbB

(56) Entgegenhaltungen:
- CA-A1- 2 858 516
- DE-A1- 4 322 098
- US-A- 5 267 368

## Beschreibung

Die Erfindung betrifft einen Balg, z. B. eines Übergangs zwischen zwei gelenkig miteinander verbundener Fahrzeuge, wobei der Balg mehrere hintereinander angeordnete Rahmen aufweist.

Ein Balg der eingangs genannten Art ist sowohl bei Straßenfahrzeugen als auch bei Schienenfahrzeugen sowie auch von Fluggasttreppen oder - brücken bekannt. Bekannt ist ebenfalls ein Balg als Schutzelement zwischen zwei Gebäudeteilen oder zu einem Gebäudeteil.

Aus der CA 2858516 A1 ist in diesem Zusammenhang eine Balgkonstruktion bekannt, bei der eine Mehrzahl von Rahmenelementen auf der Außen- und Innenseite des Balges vorgesehen sind, wobei Rahmenelemente auf der Innenseite des Seitenwandbereichs des Balges mit Rahmenelementen im Dachbereich des Balges verbunden sind. Die Rahmenelemente des Dachbereichs befinden sich auf der Außenseite des Balges, die des Seitenwandbereichs auf der Innenseite des Balges. Durch diese spezielle Konstruktion eines Balges wird erreicht, dass der dort dargestellte Balg preiswerter und einfacher in der Herstellung ist, da er aus einer geringeren Anzahl von Bestandteilen besteht.

Aus der DE 4322098 A1 ist ein Balg als Teil eines Übergangs zwischen zwei gelenkig miteinander verbundenen Fahrzeugen bekannt, bei dem der Boden des Balges lösbar mit den Seitenwänden des Balges verbunden ist.

Die US 5,267,368 A zeigt das Vordach einer Fluggastbrücke. Hierbei sind eine Mehrzahl von hintereinander angeordneten Kopf- und Seitenstangen vorgesehen, die durch Gelenke miteinander verbunden sind. Diese Stangen nehmen ein beschichtetes Gewebe auf, wobei die Verbindung des Gewebes mit den Stangen durch ärmelähnliche Laschen erfolgt.

Bei Straßenfahrzeugen, beispielsweise einem Gelenkbus, umspannt der Balg des Übergangs üblicherweise eine Plattform und das Gelenk, wohingegen bei Schienenfahrzeugen, z. B. Straßenbahnen oder Schnellzügen, eine Plattform oder eine Brücke als Übergangseinrichtung von dem Balg umspannt wird. Insbesondere bei schnell fahrenden Schienenfahrzeugen ist es häufig so, dass der Übergang nicht nur einen Balg umfasst, sondern zwei ineinander gelagerte Bälge, also sowohl einen Außen- als auch einen Innenbalg.

Nun sind Schienenfahrzeuge bekannt, und hier insbesondere der TGV, bei dem die einzelnen Waggons im Bereich des Übergangs auf sogenannten Jakobs-Drehgestellen lagern. Auch ist bekannt, dass Bälge in Abhängigkeit des verwendeten Materials relativ schnell verschleißen können. Beim TGV ist es nun so, dass aufgrund der Lagerung der Waggons auf Jakobs-Drehgestellen die Trennung der Waggons zum Austausch der Bälge nur mit erheblichem Aufwand möglich ist. Andererseits ist es so, dass der Übergang zwischen zwei Waggons nicht unmittelbar an die Waggons anschließt, sondern durch einen tunnelartigen Durchgang mit dem jeweiligen Waggon verbunden ist. Der tunnelartige Durchgang oder tunnelartige Zwischenraum ist vom Querschnitt her kleiner als der Querschnitt des Balges, der ausgetauscht werden soll. Das heißt, ein Austausch des Balges kann nur dann stattfinden, wenn tatsächlich die Waggons zwischen denen der Balg ausgetauscht werden muss, vom Jakobs-Drehgestell heruntergenommen werden.

Auch gibt es Bälge bei Übergängen von Schienenfahrzeugen, die sehr groß sind. Dies sind z. B. Bälge von Übergängen von Doppelstockwagen.

Die Bälge von Fluggastbrücke oder -treppen sind häufig weit über 3m hoch und auch sehr breit. Der Transport ist somit nicht unkompliziert. Ähnliches gilt für Bälge zwischen zwei Gebäudeteilen oder zu einem Gebäudeteil hin. Die der Erfindung zugrunde liegende Aufgabe besteht darin, den Austausch des Balges, insbesondere bei einem TGV, zu vereinfachen. Weiterhin besteht die Aufgabe darin, größere Bälge platzsparend transportieren zu können.

Die Aufgabe wird erfindungsgemäß dadurch gelöst, dass sämtliche Rahmen des Balges in einer Ebene auf zwei einander gegenüberliegenden Seiten unter Bildung mehrerer Balgteile geteilt sind, wobei die Länge der Teilung der Rahmen, die durch den stirnseitigen Abstand der Rahmen im Bereich der Teilung gebildet ist, derart ist, dass die Balgteile frontseitig aufeinander zu klappbar sind. Das heißt, dass die Rahmen im Bereich der jeweiligen Seitenwand vorteilhaft in einer Ebene geteilt ausgebildet sind, also alle Rahmen auf gleicher Höhe geteilt sind. Jeder Rahmen bildet bei einem kastenförmig umlaufenden Balg zwei Rahmenteile; bei einem im Querschnitt U-förmigen Balg werden drei Rahmenteile gebildet. Der der Erfindung zugrunde liegende Gedanke besteht demzufolge darin, die Balgteile des Balges im Bereich der Teilung zusammenzuklappen, um den Balg insgesamt bei einem Refurbishment des TGV durch den tunnelartigen Zwischenraum zwischen Waggon und dem Ort der Anbringung des Balges transportieren zu können. An dieser Stelle wird daran erinnert, dass der tunnelartige Durchgang im Querschnitt geringer ist, als der Außenquerschnitt des Balges selbst. In diesem Zusammenhang ist des Weiteren vorgesehen, dass die Länge der Teilung der Rahmen, das heißt des Abstandes der Stirnseiten der Rahmen im Bereich der Teilung, also die Länge des Teilungsabschnittes, derart ist, dass die beiden Balgteile tatsächlich aufeinander zuklappbar sind. Im zusammengeklappten Zustand sind die Bälge im Übrigen auch platzsparend zu transportieren, insbesondere, wenn es sich um große Bälge handelt. Die Schenkel können hierbei frontal aufeinander zugeklappt werden.

Als besonders vorteilhaft hat sich herausgestellt, wenn die Teilung der Rahmen im Bereich des unteren Drittels, bis zur Hälfte der Höhe der jeweiligen Seitenwand erfolgt; dies in Abhängigkeit von der Größe des Balges. Dies hat zur Folge, dass beispielsweise das untere Drittel bzw. die Hälfte des Balges auf den oberen Teil des Balges zugeklappt werden kann, somit kann der Balg aufgrund der verminderten Größe nunmehr problemlos durch den tunnelartigen Zwischenraum zum Einsatzort gebracht werden bzw. platzsparend per LKW transportiert werden.
Nach einem weiteren Merkmal der Erfindung ist vorgesehen, dass im Bereich der Teilung der Rahmen, die Rahmenteile durch Übersetzprofile miteinander verbindbar sind. Hieraus wird deutlich, dass nach dem Einbau des Balges zur Erhöhung der Stabilität im Bereich der Teilung Übersetzprofile vorgesehen sind, die den Abstand zwischen den Enden der beiden Rahmenteile überbrücken, um so die ursprüngliche Stabilität herbeizuführen. Die Verbindung des Übersetzprofiles mit den Rahmenteilen erfolgt beispielsweise durch Kleben, Nieten oder Verschrauben.

Im Einzelnen ist vorgesehen, dass die Balgrahmen des Balges die Teilung aufweisen. Das heißt, die Befestigungsrahmen sind nicht geteilt, da sich diese bereits an der Stirnseite des Fahrzeugs, der Fluggastbrücke oder - treppe oder dem Gebäude befinden, also nicht ausgetauscht werden müssen. Es sind auch Bälge von Übergängen bekannt, insbesondere bei Waggons zum Transport von Fahrzeugen, wie sie insbesondere zur Unterquerung des Ärmelkanals eingesetzt werden, bei denen der Balg durch Anschraubrahmen mit der Stirnseite des Fahrzeugs verbunden ist. Diese Anschraubrahmen verbleiben am Balg und werden wie der übliche Balgrahmen auch, geteilt. Besteht der Balg aus zwei Balghälften, werden die Kuppelrahmen zwischen den Balghälften vom Balg getrennt. Wie bereits ausgeführt, kann der untere Teil des Balges im Bereich der Balgrahmen komplett auf den oberen Teil des Balges zugeklappt werden. Wesentlich hierbei ist allerdings, dass die Falten oder Wellen im Bereich der Teilung der Balgrahmen durchgängig ausgebildet sind. Das heißt, dass die aus dem mit einem Elastomer beschichteten Festigkeitsträger hergestellten Falten oder Wellen im Bereich der Teilung der Rahmen die Teilung der Rahmen überbrücken. Dies behindert die Klappbewegung des unteren Teiles des Balges auf den oberen Teil des Balges nicht, da die Wellen oder Falten hochelastisch sind. Dadurch, dass die Falten oder Wellen im Bereich der Teilung durchgängig sind, also durchlaufen, gibt es keine Probleme hinsichtlich des Eindringens von Feuchtigkeit.

Weiterhin ist vorteilhaft vorgesehen, dass der Balg im Übergang zum Befestigungsrahmen eine Halbwelle, also eine halbe Welle oder Falte aufweist, die endseitig einen Keder aufnimmt. Der Keder wird hierbei durch den Befestigungsrahmen erfasst, wobei der Keder als Elastomerprofil ausgebildet ist. Der Keder kann hierbei durch den Befestigungsrahmen z. B. gegen die Stirnwand des Durchgangs des Fahrzeugs oder der Fluggastbrücke oder -treppe gepresst werden, sodass der Innenraum gegen eindringende Feuchtigkeit abgedichtet ist.

In diesem Zusammenhang ist des Weiteren vorgesehen, dass der Befestigungsrahmen eine im Querschnitt L-förmige Aussparung zur Aufnahme des Keders aufweist, wobei die L-förmige Aussparung durch einen Klemmrahmen zumindest partiell verschließbar ist. Das heißt, dass der Keder nicht nur z. B. gegen die Stirnwand des Durchgangs des Wagenkastens des Fahrzeugs gepresst wird, sondern auch gegen die L-förmige Aussparung im Befestigungsrahmen. Dies sorgt für eine höhere Dichtigkeit gegen eindringende Feuchtigkeit.

Der Klemmrahmen selbst kann nach einem besonderen Merkmal der Erfindung eine maulartige Öffnung zur Aufnahme einer Halbwelle eines Innenwellenbalges aufweisen, was bedeutet, dass der Übergang einen sogenannten Doppelwellenbalg aufweist, wobei die beiden Bälge des Doppelwellenbalges ineinander gelagert sind. Eine solche Konstruktion wird insbesondere bei schnell fahrenden Zügen eingesetzt, um Druckstöße bei Tunneldurchfahrt oder bei der Begegnung zweier Züge zu vermindern.

Anhand der Zeichnungen wird die Erfindung nachstehend beispielhaft anhand des Balges eines Übergangs zwischen zwei gelenkig miteinander verbundener Fahrzeuge näher erläutert.
- Fig. 1: zeigt den Doppelwellenbalg in im Fahrzeug eingebauten Zustand in perspektivischer Darstellung;
- Fig. 2: zeigt eine Frontansicht auf den Doppelwellenbalg gemäß Fig. 1;
- Fig. 3: zeigt die Art der Befestigung des Doppelwellenbalges am Fahrzeug in einer Schnittdarstellung in schematischer Ansicht;
- Fig. 4: zeigt schematisch den Balg eines im Querschnitt U-förmigen Daches einer Fluggastbrücke oder -treppe (nicht Bestandteil der Erfindung);
- Fig. 5: zeigt den Balg gemäß Fig. 4, wobei die Schenkel aufeinander zu geklappt sind (nicht Bestandteil der Erfindung).

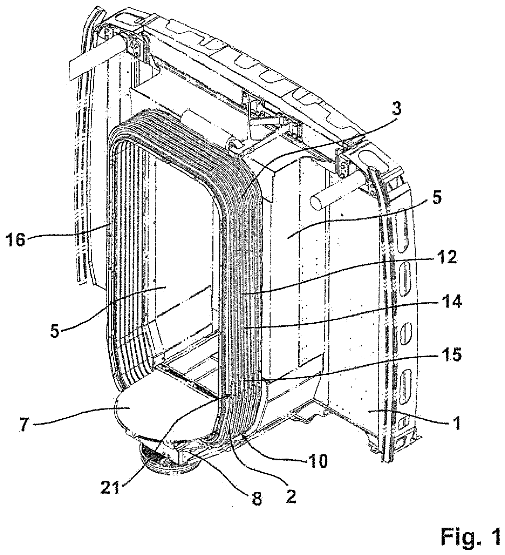

Gemäß Fig. 1 ist das Fahrzeug mit 1 bezeichnet. Zwischen dem eigentlichen Fahrzeug, das heißt, dem Waggon, der die Passagiere aufnimmt und dem Balg 10 befindet sich ein tunnelförmiger Durchgang 5, der einen lichten Querschnitt aufweist, der kleiner als der Außenquerschnitt des Balges 10 ist. Das heißt, dass der Balg 10 so ohne Weiteres nicht durch den tunnelförmigen Durchgang 5 transportiert werden kann. Der Balg 10 umgibt die Übergangseinrichtung 7 in Form einer Plattform, wobei sich unter der Übergangseinrichtung 7 ein Rahmengestell 8 befindet, dass der Aufnahme des nicht dargestellten Jakobs-Drehgestelles dient.

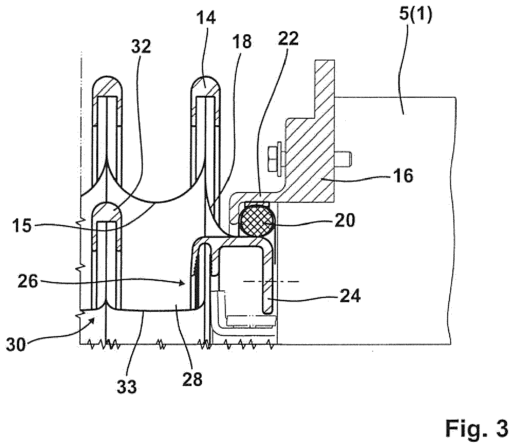

Der Balg 10 weist Balgrahmen 14 auf, die zur Bildung der Wellen Streifen 15 eines aus Elastomer beschichteten Festigkeitsträgers klemmend erfassen. Der Querschnitt des Balgrahmens 14 ist demzufolge, im Querschnitt ausgebildet, U-förmig. Der Balg 10 ist endseitig durch Befestigungsrahmen 16 (Fig. 3) mit dem Durchgang 5 des Wagenkastens des Fahrzeugs 1 verbunden. Hierzu weist der Balg 10 im Übergang zum Befestigungsrahmen 16 eine Halbwelle 18 auf, die endseitig den Keder 20 zeigt. Der Keder 20 lagert in der L-förmigen Aussparung 22 des Befestigungsrahmens 16 und wird gegen die stirnseitige Wandung des Durchgangs 5 gepresst. Der Klemmrahmen 24 weist eine maulartige Öffnung 26 für die Halbwelle 28 eines Innenwellenbalges 30 auf, wobei der Klemmrahmen 24 ebenfalls gegen den Keder 20 drückt. Der Klemmrahmen 24 ist ebenso wie der Befestigungsrahmen 16 an der stirnseitigen Wandung des Durchgangs 5 angeschraubt (Fig. 3)

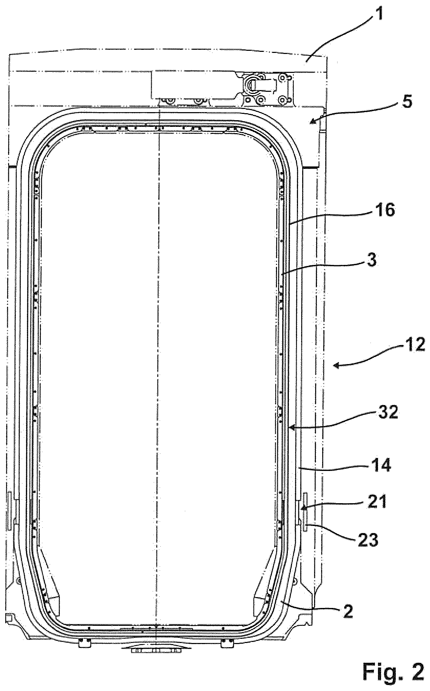

Im Bereich der Seitenwände 12 des Balges 10 als Außenwellenbalg und des Balges 30 als Innenwellenbalg sind die Balgrahmen 14, 32 der beiden Bälge über eine Länge von mehreren cm unter Bildung des Teilungsabschnittes 21 geteilt. Nicht geteilt sind in diesem Bereich allerdings die Wellen des Innen- und des Außenwellenbalges, das heißt, der Streifen 15, 33 aus mit einem Elastomer beschichteten Festigkeitsträger, der die eigentliche Welle oder gegebenenfalls auch eine Falte bildet, ist jeweils durchgängig ausgebildet, sodass der jeweilige Balg in dem Bereich der Teilung zwar geschwächt ist aber dennoch dicht ist. Im Einzelnen ergibt sich dies in Anschauung von Fig. 2 und Fig. 3, wo die Balgrahmen 14 des Balges 10 als Außenwellenbalg und die Balgrahmen 32 des Innenwellenbalges 30 in der Seitenwand 12 unter Bildung des Teilungsabschnittes 21 jeweils geteilt sind. Hierbei entstehen zwei Balgteile 2,3 die zwar durch das Balgmaterial verbunden sind, aber dennoch aufeinander zuklappbar sind. Nach der Montage kann zur Versteifung der Balgrahmen 14, 32 jeweils ein sogenanntes Übersetzprofil 23 vorgesehen sein, das auf die Enden der Balgrahmen 14, 32 im Bereich des Teilungsabschnitts 21 aufgesetzt wird und den Teilungsabschnitt 21 quasi überbrückt. Die Befestigung des Übersetzungsprofiles erfolgt vorteilhaft durch Nieten oder Klemmen (nicht dargestellt).

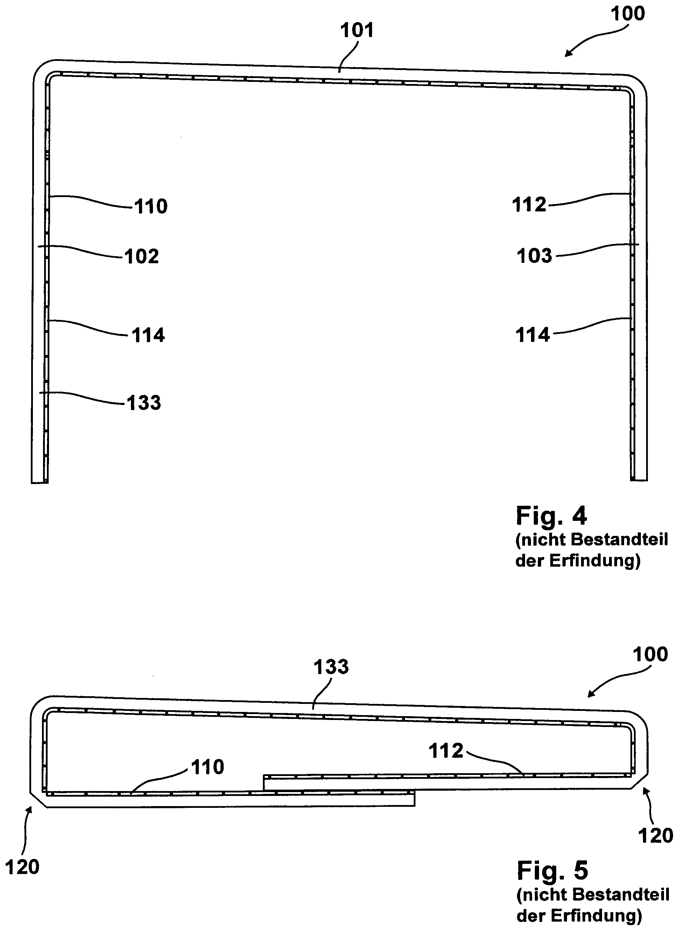

Der Balg des Vordachs einer Fluggastbrücke oder -treppe ist schematisch in den Fig. 4 und 5 dargestellt. Der Balg 100 ist im Querschnitt U-förmig ausgebildet, wobei die Balgrahmen 114 der beiden Schenkel 110, 112 im oberen Bereich der Schenkel bzw. der Seitenwand des Balges unter Bildung insgesamt dreier Balgteile 101, 102, 103 geteilt sind, wobei die Balgteile 102, 103 und aufeinander zugeklappt sind (Fig. 5). Das heißt, die Balgteile 102, 103 sind Teile der Schenkel 110, 112 des U-förmigen Balges. Die Balgrahmen 114 sind hierbei auf der Innenseite des Balges angeordnet und verbinden die Streifen 133 aus mit einem Elastomer beschichteten Festigkeitsträger, z. B. ein Gewebe, wobei die Streifen 133 die Wellen oder Falten bilden. Die Abknickung der Wellen oder Falten erfolgt insofern über den Stegbereich der einzelnen Wellen oder Falten, weshalb diese im Bereich der Knickung außen eine Abflachung 120 bilden.

### Bezugszeichenliste:

- 1: Fahrzeug
- 2: Balgteil
- 3: Balgteil
- 5: Durchgang
- 7: Übergangseinrichtung
- 8: Rahmengestell
- 10: Balg (Außenwellenbalg)
- 12: Seitenwand
- 14: Balgrahmen
- 15: Streifen aus mit Elastomer beschichteten Festigkeitsträger zur Bildung einer Welle
- 16: Befestigungsrahmen
- 18: Halbwelle
- 20: Keder
- 21: Teilungsabschnitt
- 22: Aussparung
- 23: Übersetzprofil
- 24: Klemmrahmen
- 26: Öffnung
- 28: Halbwelle
- 30: Innenwellenbalg
- 32: Balgrahmen
- 33: Streifen aus mit Elastomer beschichteten Festigkeitsträger zur Bildung einer Welle
- 100: Balg
- 101: Balgteil
- 102: Balgteil
- 103: Balgteil
- 110: Schenkel
- 112: Schenkel
- 114: Balgrahmen
- 120: Abflachung
- 133: Streifen aus mit Elastomer beschichteten Festigkeitsträger zur Bildung einer Welle

## Patentansprüche

1. Balg (10), eines Übergangs zwischen zwei gelenkig miteinander verbundener Fahrzeuge (1), wobei der Balg (10) mehrere hintereinander angeordnete Rahmen aufweist,
wobei sämtliche Rahmen in einer Ebene auf zwei einander gegenüberliegenden Seiten unter Bildung mehrerer Balgteile (2, 3) geteilt sind,
**dadurch gekennzeichnet, dass** die Länge der Teilung der Rahmen, die durch den stirnseitigen Abstand der Rahmen im Bereich der Teilung gebildet ist, derart ist, dass die Balgteile (2, 3) frontseitig aufeinander zu klappbar sind.

2. Balg (10), z. B. eines Übergangs zwischen zwei gelenkig miteinander verbundener Fahrzeuge (1) nach Anspruch 1,
**dadurch gekennzeichnet,**
**dass** die Teilung der Rahmen im Bereich des unteren Drittels bis zur Hälfte der Höhe der Seitenwand des Balges erfolgt.

3. Balg (10), z. B. eines Übergangs zwischen zwei gelenkig miteinander verbundener Fahrzeuge (1) nach einem der voranstehenden Ansprüche 1 oder 2,
**dadurch gekennzeichnet,**
**dass** im Bereich der Teilung die Rahmen durch Übersetzprofile (23) verbindbar sind.

4. Balg (10), z. B. eines Übergangs zwischen zwei gelenkig miteinander verbundener Fahrzeuge (1) nach einem der voranstehenden Ansprüche,
**dadurch gekennzeichnet,**
**dass** die Rahmen als Balgrahmen (14, 32) zur Bildung von Falten oder Wellen eines Falten- oder Wellenbalges Streifen (15, 33) eines mit einem Elastomer beschichteten Festigkeitsträgers erfassen.

5. Balg (10), z. B. eines Übergangs zwischen zwei gelenkig miteinander verbundener Fahrzeuge (1) nach einem der Ansprüche 1 bis 4,
**dadurch gekennzeichnet,**
**dass** die endseitigen Rahmen als Befestigungsrahmen (16) zur Verbindung des Balges (10) mit dem Wagenkasten des jeweiligen Fahrzeugs (1) ausgebildet sind.

6. Balg (10), z. B. eines Übergangs zwischen zwei gelenkig miteinander verbundener Fahrzeuge (1) nach Anspruch 5,
**dadurch gekennzeichnet,**
**dass** der Balg (10) im Übergang zum Befestigungsrahmen (16) eine Halbwelle (18) aufweist, die endseitig einen Keder (20) aufnimmt.

7. Balg (10), z. B. eines Übergangs zwischen zwei gelenkig miteinander verbundener Fahrzeuge (1) nach Anspruch 6,
**dadurch gekennzeichnet,**
**dass** der Keder (20) durch den Befestigungsrahmen (16) klemmend erfassbar ist.

8. Balg (10), z. B. eines Übergangs zwischen zwei gelenkig miteinander verbundener Fahrzeuge (1) nach einem der Ansprüche 6 oder 7,
**dadurch gekennzeichnet,**
**dass** der Befestigungsrahmen (16) eine im Querschnitt L-förmige Aussparung (22) zur Aufnahme des Keders (20) aufweist, wobei die L-förmige Aussparung (22) durch einen Klemmrahmen (24) zumindest partiell verschließbar ist.

9. Balg (10), z. B. eines Übergangs zwischen zwei gelenkig miteinander verbundener Fahrzeuge (1) nach Anspruch 8,
**dadurch gekennzeichnet,**
**dass** der Klemmrahmen (24) eine maulartige Öffnung (26) zur Aufnahme einer Halbwelle (28) eines Innenbalges (30) aufweist.

10. Balg (10), z. B. eines Übergangs zwischen zwei gelenkig miteinander verbundener Fahrzeuge (1) nach einem der Ansprüche 4 bis 9,
**dadurch gekennzeichnet,**
**dass** die Falten oder Wellen im Bereich der Teilung der Balgrahmen (14, 32) durchgehend ausgebildet sind.

## Claims

1. A bellows (10) of a gangway between two articulately connected vehicles (1), wherein the bellows (10) comprises several successively arranged frames,
wherein
all the frames are divided in a plane on two opposite sides, thus forming several bellows parts (2, 3),
**characterized in that**
the length of the spacing of the frames, which is formed by the front side distance between the frames in the area of the division, is such that the bellows parts (2, 3) can be folded towards each other on the front side.

2. The bellows (10), e.g. of a gangway between two articulately connected vehicles (1) according to claim 1,
**characterized in that**
the division of the frames is carried out in the area of the bottom third up to half the height of the lateral wall of the bellows.

3. The bellows (10) e.g. of a gangway between two articulately connected vehicles (1) according to claim one of the preceding claims 1 or 2,
**characterized in that**
the frames are connectable by transition profiles (23) in the area of the division.

4. The bellows (10) e.g. of a gangway between two articulately connected vehicles (1) according to one of the preceding claims,
**characterized in that**
in order to form the folds or corrugations of a folding or corrugated bellows, the frames serving as bellows frames (14, 32) grasp strips (15, 33) of a reinforcing material coated with an elastomer.

5. The bellows (10) e.g. of a gangway between two articulately connected vehicles (1) according to one of the claims 1 to 4,
**characterized in that**
the frames located at the ends are designed as fastening frames (16) for connecting the bellows (10) with the carriage body of the respective vehicle (1).

6. The bellows (10) e.g. of a gangway between two articulately connected vehicles (1) according to claim 5,
**characterized in that**
in the transition to the fastening frame (16), the bellows (10) comprises a half corrugation (18), which receives a keder (20) at its end.

7. The bellows (10) e.g. of a gangway between two articulately connected vehicles (1) according to claim 6,
**characterized in that**
the keder (20) can be clamped by the fastening frame (16).

8. The bellows (10) e.g. of a gangway between two articulately connected vehicles (1) according to one of the claims 6 or 7,
**characterized in that**
the fastening frame (16) has a cross-sectionally L-shaped recess (22) for receiving the keder (20), wherein the L-shaped recess (22) is at least partially closable by a clamping frame (24).

9. The bellows (10) e.g. of a gangway between two articulately connected vehicles (1) according to claim 8,
**characterized in that**
the clamping frame (24) has a jaws-like opening (26) for receiving a half corrugation (28) of an inner bellows (30).

10. The bellows (10) e.g. of a gangway between two articulately connected vehicles (1) according to one of the claims 4 to 9,
**characterized in that**
the folds or corrugations are designed so that they are continuous in the area of the division of the bellows frames (14, 32).

## Revendications

1. Soufflet (10) d'un passage d'intercirculation entre deux véhicules (1) reliés entre eux de manière articulée, le soufflet (10) ayant plusieurs cadres disposés les uns derrière les autres,
où
tous les cadres sont divisés dans un plan sur deux côtés opposés, formant ainsi plusieurs parties de soufflets (2, 3),
**caractérisé en ce que**
la longueur de la division des cadres, qui est formée par l'espacement frontal des cadres dans la région de la division, est telle que les parties du soufflet (2, 3) peuvent être repliées l'une vers l'autre à l'avant.

2. Soufflet (10), par exemple d'un passage d'intercirculation entre deux véhicules articulés (1) selon la revendication 1,
**caractérisé en ce que**
la division des cadres dans la zone du tiers inférieur atteint jusqu'à la moitié de la hauteur de la paroi latérale du soufflet.

3. Soufflet (10), par exemple d'un passage d'intercirculation entre deux véhicules articulés (1) selon l'une des revendications précédentes 1 ou 2,
**caractérisé en ce que**
dans la zone de la division, les cadres peuvent être reliés au moyen de profilés de transition (23).

4. Soufflet (10), par exemple d'un passage d'intercirculation entre deux véhicules articulés (1) selon l'une des revendications ci-dessus,
**caractérisé en ce que**
en tant que cadres de soufflets (14, 32), les cadres saisissent des bandes (15, 33) d'un renfort revêtu d'un élastomère pour former les plis ou les ondulations d'un soufflet plissé ou d'un soufflet ondulé.

5. Soufflet (10), par exemple d'un passage d'intercirculation entre deux véhicules articulés (1) selon l'une des revendications 1 à 4,
**caractérisé en ce que**
les cadres d'extrémité sont conçus comme des cadres de fixation (16) pour relier le soufflet (10) à la carrosserie du véhicule (1) respectif.

6. Soufflet (10), par exemple d'un passage d'intercirculation entre deux véhicules articulés (1) selon la revendication 5,
**caractérisé en ce que**
le soufflet (10) comporte une demie-ondulation (18) dans la transition vers le cadre de fixation (16), laquelle demie-ondulation reçoit un bourrelet (20) à son extrémité.

7. Soufflet (10), par exemple d'un passage d'intercirculation entre deux véhicules articulés (1) selon la revendication 6,
**caractérisé en ce que**
le bourrelet (20) peut être saisi par le cadre de fixation (16) de manière à le serrer.

8. Soufflet (10), par exemple d'un passage d'intercirculation entre deux véhicules articulés (1) selon l'une des revendications 6 ou 7,
**caractérisé en ce que**
le cadre de fixation (16) présente un évidement (22) de section transversale en forme de L pour recevoir le bourrelet (20), l'évidement (22) en forme de L pouvant être fermé au moins partiellement par un cadre de serrage (24).

9. Soufflet (10), par exemple d'un passage d'intercirculation entre deux véhicules articulés (1) selon la revendication 8,
**caractérisé en ce que**
le cadre de serrage (24) présente une ouverture (26) en forme de bouche pour recevoir une demie-ondulation (28) d'un soufflet intérieur (30).

10. Soufflet (10), par exemple d'un passage d'intercirculation entre deux véhicules articulés (1) selon l'une des revendications 4 à 9,
**caractérisé en ce que**
les plis ou les ondulations dans la région de la division des cadres de soufflets (14, 32) sont formés de façon continue.
